# FASCICULE DE BREVET EUROPEEN

(11) **EP 2 520 205 B1**
(45) Date de publication et mention de la délivrance du brevet: **25.06.2014**
(21) Numéro de dépôt: 12166470.0
(22) Date de dépôt: 02.05.2012
(51) Int. Cl.: A47J 43/046, A47J 43/07, A47J 43/044, A47J 43/06

(54) **Appareil électroménager pour la préparation de sauces homogènes**
Elektrohaushaltsgerät für die Herstellung von homogenen Saucen
Household appliance for preparing smooth sauces

(30) Priorité: 06.05.2011 FR 1153919
(43) Date de publication de la demande: 07.11.2012
(73) Titulaire: SEB S.A., 69130 Ecully (FR)
(72) Inventeur: Dirand, Pascal, 21160 Marsanny-la-Côte (FR)
(74) Mandataire: Cémeli, Eric Philippe Laurent

(56) Documents cités:
- EP-A1- 0 350 380
- WO-A1-01/03559
- US-A- 2 743 910
- US-A- 2 851 258

## Description

La présente invention concerne le domaine technique des appareils électroménagers prévus pour mélanger les ingrédients en les chauffant.

La présente invention concerne plus particulièrement les appareils électroménagers prévus pour la réalisation de sauces à partir de plusieurs ingrédients de consistances différentes.

Il est connu du document EP 0 350 380 un appareil électroménager de préparation culinaire chauffant comportant une pale entrainée en rotation dans une cuve, dans lequel la pale présente un bras inférieur s'étendant au dessus du fond de la cuve, le bras inférieur comportant une extrémité relevée s'étendant au voisinage de la base de la paroi latérale de la cuve. Un inconvénient de la réalisation précitée réside dans le temps nécessaire à l'obtention de sauces bien homogènes, voire dans l'homogénéité insuffisante des sauces obtenues.

Un appareil selon le préambule de la revendication 1 est connu du document US 2 743 910.

Un but de la présente invention est de proposer un appareil électroménager de préparation culinaire chauffant permettant d'obtenir une consistance homogène pour des sauces réalisées à partir d'ingrédients de consistances différentes.

Un autre but de la présente invention est de proposer un appareil électroménager de préparation culinaire chauffant permettant d'obtenir plus rapidement des sauces de consistance satisfaisante.

Ces buts sont atteints avec un appareil électroménager de préparation culinaire chauffant comportant une cuve présentant un fond et une paroi latérale, ainsi qu'une pale entrainée en rotation dans la cuve, la pale présentant un bras inférieur s'étendant au dessus du fond de la cuve, le bras inférieur comportant une extrémité relevée ménageant un passage périphérique avec la paroi latérale de la cuve, le passage périphérique présentant une restriction supérieure, du fait que l'extrémité relevée du bras inférieur présente une face extérieure se rapprochant de la paroi latérale de la cuve à partir d'un bord latéral d'attaque. Cette disposition permet de faciliter l'engagement des morceaux entre l'extrémité relevée du bras inférieur et la paroi latérale de la cuve pour les cisailler ensuite. La restriction supérieure permet d'éviter une fuite systématique des morceaux les plus gros au dessus de l'extrémité relevée du bras inférieur. Du fait de la présence de la restriction supérieure, ces morceaux peuvent être coincés entre la cuve et l'extrémité relevée du bras inférieur et être cisaillés sous l'effet du mouvement relatif entre la cuve et l'extrémité relevée du bras inférieur, ce qui permet de les dissocier pour obtenir une sauce bien homogène.

Avantageusement, la distance minimale entre le bras inférieur et le fond de la cuve est plus réduite que la distance maximale entre le bras inférieur et la paroi latérale de la cuve au niveau du passage périphérique. Ainsi les morceaux les plus gros sont chassés vers le passage périphérique puis coincés entre la cuve et l'extrémité relevée du bras inférieur pour être cisaillés sous l'effet du mouvement relatif entre la cuve et le bras inférieur.

Avantageusement encore, le bras inférieur ménage au moins un passage inférieur avec le fond de la cuve. Cette disposition permet de faciliter la dispersion des particules les plus fines dans la phase liquide de la sauce.

Avantageusement encore, le bras inférieur présente une face inférieure se rapprochant du fond de la cuve à partir d'un bord inférieur d'attaque. Cette disposition permet de bien homogénéiser la sauce en cisaillant les particules les plus grosses déposées sur le fond.

Avantageusement encore, la paroi latérale de la cuve présente un renflement annulaire. Cette disposition permet de favoriser la rétention de la chaleur et des arômes de la sauce.

Avantageusement alors, le renflement annulaire présente une partie supérieure inclinée entre 1 et 5° et de préférence entre 2 et 4°. Cette disposition permet de réduire la distance entre la pale et la paroi latérale de la cuve.

Avantageusement encore, l'extrémité relevée du bras inférieur s'élève au dessus de la section maximale du renflement annulaire. Cette disposition permet de faciliter le coincement des aliments dans le renflement de la paroi latérale de la cuve et leur pressage ou leur éclatement par cisaillement.

Avantageusement encore, le bras inférieur présente une nervure supérieure de rigidification. Cette disposition permet de limiter les déflexions du bras inférieur et d'exercer un effort d'écrasement et/ou de cisaillement plus important sur les ingrédients.

Avantageusement alors, la nervure supérieure de rigidification s'étend jusqu'à l'extrémité relevée du bras inférieur. Cette disposition permet de limiter les déflexions du bras inférieur au niveau de l'extrémité relevée et d'exercer un effort et/ou de cisaillement plus important.

Avantageusement encore, la nervure supérieure de rigidification s'étend jusqu'à la partie terminale de l'extrémité relevée du bras inférieur. Cette disposition permet de créer un organe de brassage repoussant la matière liquide et les particules présentes dans la sauce.

Avantageusement encore, la pale comporte un bras supérieur plongeant dans la cuve. Cette disposition permet de créer un tourbillon pour mélanger les ingrédients restés en suspension dans la sauce.

Avantageusement alors, le bras supérieur est incliné vers l'arrière par rapport au sens de rotation de la pale. Cette disposition permet de limiter les remous.

Selon une forme de réalisation avantageuse, la cuve repose sur une base motorisée prévue pour entrainer en rotation la pale agencée dans la cuve. En alternative la cuve pourrait notamment reposer sur un accessoire chauffant porté par la base motorisée.

Avantageusement alors, la cuve porte un axe entraîneur présentant un organe d'entraînement inférieur prévu pour être entrainé en rotation par la base motorisée et un organe d'entrainement supérieur prévu pour entrainer en rotation la pale. Cette disposition permet de retirer ensemble la cuve et la pale de la base motorisée, la cuve présentant un fond étanche.

Avantageusement alors, l'organe d'entraînement supérieur présente des conformations hélicoïdales. Cette disposition permet d'assurer un placage de la pale à l'intérieur de la cuve tout en facilitant la mise en place de la pale dans la cuve.

Selon une forme de réalisation préférée, la base motorisée comporte un siège chauffant et la cuve repose sur le siège chauffant. Cette disposition permet d'obtenir une cuve dépourvue de parties électriques, plus facilement nettoyable. En alternative, la cuve pourrait notamment comporter des moyens de chauffe ou être disposée sur un accessoire chauffant porté par la base motorisée.

L'invention sera mieux comprise à l'étude d'un exemple de réalisation, pris à titre nullement limitatif, illustré dans les figures annexées, dans lesquelles :
- la figure 1 est une vue en perspective d'un appareil de préparation culinaire chauffant selon l'invention,
- la figure 2 est une vue en perspective de la base de l'appareil illustré sur la figure 1, portant une cuve et une pale représentée en coupe verticale,
- la figure 3 est une vue partielle en coupe de la base de l'appareil illustrée sur les figures 1 et 2, montrant le siège chauffant ainsi que le dispositif d'entrainement,
- la figure 4 est une vue de dessus en perspective du siège chauffant de la base de l'appareil illustrée sur les figures 1 à 3,
- la figure 5 est une vue en coupe de la partie inférieure de la cuve illustrée sur les figures 1 et 2,
- la figure 6 est une vue en perspective de l'organe d'entraînement supérieur agencé à l'intérieur de la cuve illustrée sur les figures 1, 2 et 5,
- la figure 7 est une vue partielle en perspective de dessous de la pale illustrée sur les figures 1 et 2, montrant les conformations d'entrainement,
- la figure 8 est une vue en élévation de la pale illustrée sur les figures 1, 2 et 7,
- la figure 9 est une vue de dessus de la pale illustrée sur les figures 1, 2, 7 et 8,
- la figure 10 illustre la pale représentée sur les figures 1, 2, 7, 8 et 9 agencée dans la cuve illustrée sur les figures 1, 2, 5 et 6.

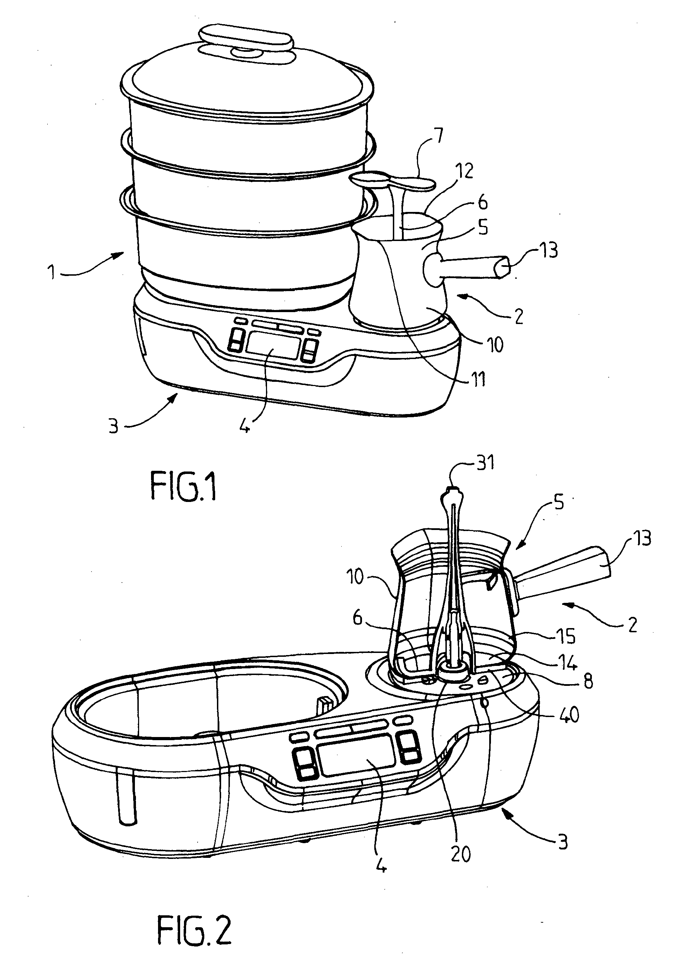

L'appareil électroménager de préparation culinaire chauffant selon l'invention illustré sur la figure 1 comporte à titre d'exemple une partie cuiseur vapeur 1 et une partie saucier 2, avec une embase 3 commune présentant un dispositif de commande 4.

La figure 2 montre plus particulièrement la partie saucier 2 disposée sur l'embase 3. L'appareil électroménager de préparation culinaire chauffant comporte une cuve 5 ainsi qu'une pale 6 entrainée en rotation dans la cuve 5. La pale 6 est de préférence guidée en rotation dans la cuve 5. La pale 6 comporte une extrémité supérieure 60 formant un support prévu pour porter une cuiller 7, visible sur la figure 1.

L'embase 3 forme une base motorisée 8 prévue pour entrainer en rotation la pale 6 agencée dans la cuve 5. La cuve 5 repose sur la base motorisée 8. La cuve 5 est montée amovible sur la base motorisée 8.

La cuve 5 comporte un corps 10 présentant un bec verseur 11 et un autre bec verseur 12 agencé à l'opposé du bec verseur 11. Une poignée 13 est montée sur le corps 10. La poignée 13 est agencée entre le bec verseur 11 et l'autre bec verseur 12. La cuve 5 présente un fond 14 et une paroi latérale 15.

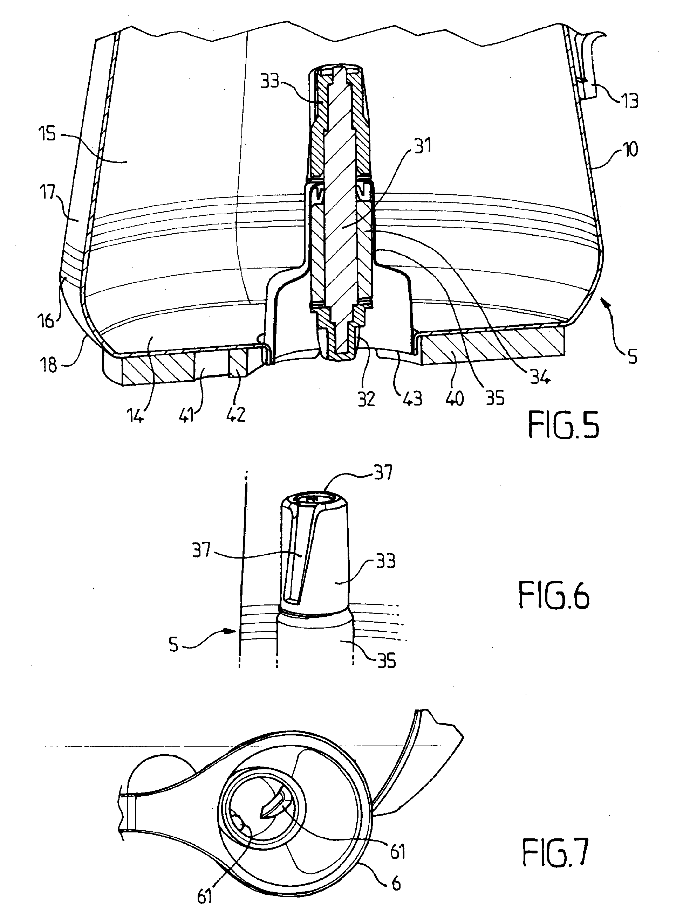

Tel que mieux visible sur la figure 5, la paroi latérale 15 de la cuve 5 présente un renflement annulaire 16. Le renflement annulaire 16 présente avantageusement une partie supérieure 17 inclinée entre 1 et 5° et de préférence entre 2 et 4° vers l'intérieur de la cuve 5 par rapport à l'axe de rotation de la pale 6, et une partie inférieure 18 raccordée avec le fond 14.

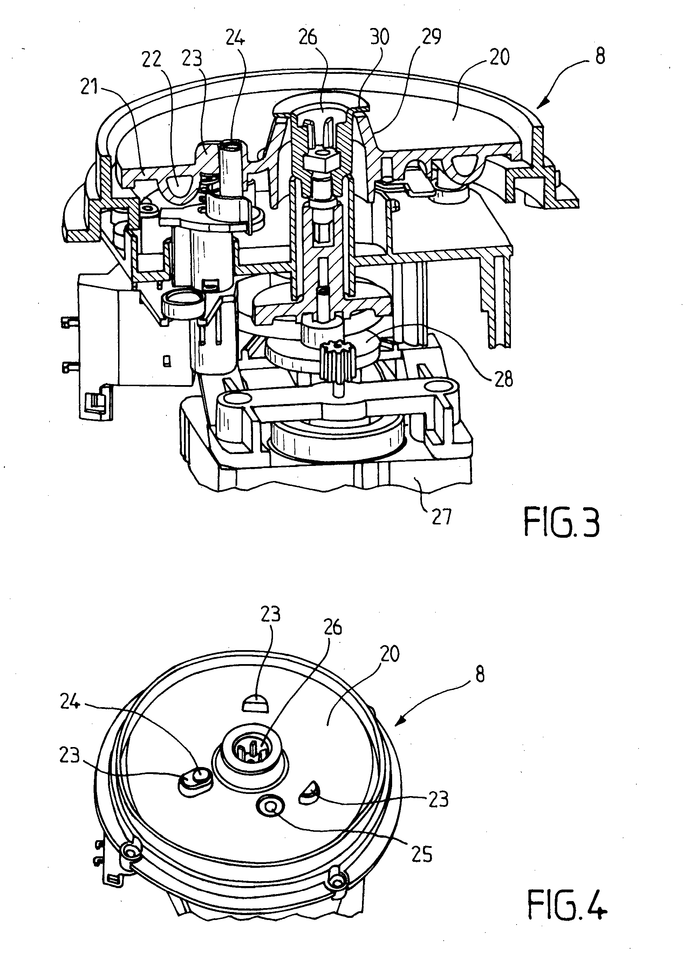

Dans le mode de réalisation représenté sur les figures, la base motorisée 8 comporte un siège chauffant 20. La cuve 5 repose sur le siège chauffant 20. Tel que visible sur la figure 2, le fond diffuseur inférieur 40 repose sur le siège chauffant 20. Tel que mieux visible sur la figure 3, le siège chauffant 20 est constitué par une platine en aluminium 21 surmoulée sur un élément chauffant blindé 22.

Tel que mieux visible sur la figure 4, le siège chauffant 20 présente des protubérances 23 prévues pour centrer la cuve 5.

La base motorisée 8 comporte un organe de détection de présence 24 de la cuve 5. L'organe de détection de présence 24 est formé par une tige mobile actionnant un micro-switch (non représenté sur les figures). La cuve 5 en place sur le siège chauffant 20 repousse l'organe de détection de présence 24.

Un capteur de température 25 est monté à travers le siège chauffant 20 dans un joint afin d'assurer une étanchéité en cas de débordement et une isolation thermique. Le capteur de température 25 permet de capter directement la température de la cuve 5. Le capteur de température 25 est par exemple formé par une résistance CTN.

La base motorisée 8 comporte un axe d'entrainement 26 entrainé par un moteur 27 si désiré par l'intermédiaire d'un réducteur 28, représenté schématiquement sur la figure 3. L'axe d'entrainement 26 traverse le siège chauffant 20. L'axe d'entrainement 26 surplombe le siège chauffant 20. Le siège chauffant 20 forme une cheminée 29. L'axe d'entrainement 26 présente une colerette 30 s'étendant au dessus de la cheminée 29.

Le dispositif de commande 4 comporte avantageusement plusieurs programmes de fonctionnement contrôlant l'alimentation du moteur 27 prévu pour entraîner la pale 6 ainsi que l'alimentation des moyens de chauffe formés par l'élément chauffant blindé 22. Si désiré les programmes peuvent comporter une durée de fonctionnement ajustable. Si désiré les programmes peuvent comporter une phase de mélange à température ambiante, suivie d'un chauffage, par exemple pour réaliser une sauce hollandaise. Si désiré les programmes peuvent comporter une phase de maintien au chaud.

La vitesse de rotation de la pale 6 est avantageusement comprise entre 60 et 100 tours/min. Si désiré, la rotation de la pale 6 peut être séquentielle, notamment pour éviter de trop refroidir les sauces portées à ébullition durant leur réalisation, telles que par exemple les sauces au vin.

Le dispositif de commande 4 comporte avantageusement une régulation de température utilisant le capteur de température 25. La température de consigne peut notamment être choisie entre 65 et 100°C pour obtenir une température maximale dans la sauce comprise entre 80°C et 100°C.

Le corps 10 de la cuve 5 est avantageusement réalisé en acier inoxydable. Le corps 10 de la cuve 5 est solidaire d'un fond diffuseur inférieur 40 réalisé en aluminium.

Tel que visible sur la figure 5, le fond diffuseur inférieur 40 présente des conformations concaves 41 prévues pour loger les protubérances 23 ainsi qu'un organe d'actionnement 42 prévu pour repousser l'organe de détection de présence 24.

Dans le mode de réalisation représenté sur les figures, la pale 6 est entrainée par l'intermédiaire de la cuve 5.

Tel que mieux visible sur la figure 5, la cuve 5 porte un axe entraîneur 31 présentant un organe d'entraînement inférieur 32 prévu pour être entrainé en rotation par la base motorisée 8 et un organe d'entrainement supérieur 33 prévu pour entrainer en rotation la pale 6. L'axe entraîneur 31 est monté dans un palier 34 logée dans une partie tubulaire 35 montée dans une ouverture du fond 14. Un joint d'étanchéité 36 est monté sur le palier 34 autour de l'axe entraineur 31. Le fond diffuseur inférieur 40 présente une forme annulaire ménageant un passage central 43 laissant accessible l'organe d'entraînement inférieur 32.

Tel que que mieux visible sur la figure 6, l'organe d'entraînement supérieur 33 présente des conformations hélicoïdales 37. Tel que montré sur la figure 7, la pale 6 présente des conformations hélicoïdales associées 61 prévues pour venir en prise avec les conformations hélicoïdales 37 de l'organe d'entrainement supérieur 33 lorsque la pale 6 est mise en place dans la cuve 5. L'orientation des conformations hélicoïdales 37 et des conformations hélicoïdales associées 61 est choisie par rapport au sens de rotation de la pale 6 dans la cuve 5 pour plaquer la pale 6 par rapport au fond 14 de la cuve 5. L'organe d'entrainement supérieur 33 entraîné en rotation maintient ainsi la pale 6 axialement en butée pour éviter le soulèvement de la pale 6 lors du fonctionnement de l'appareil, tout en autorisant une mise en place et un retrait aisé de la pale 6.

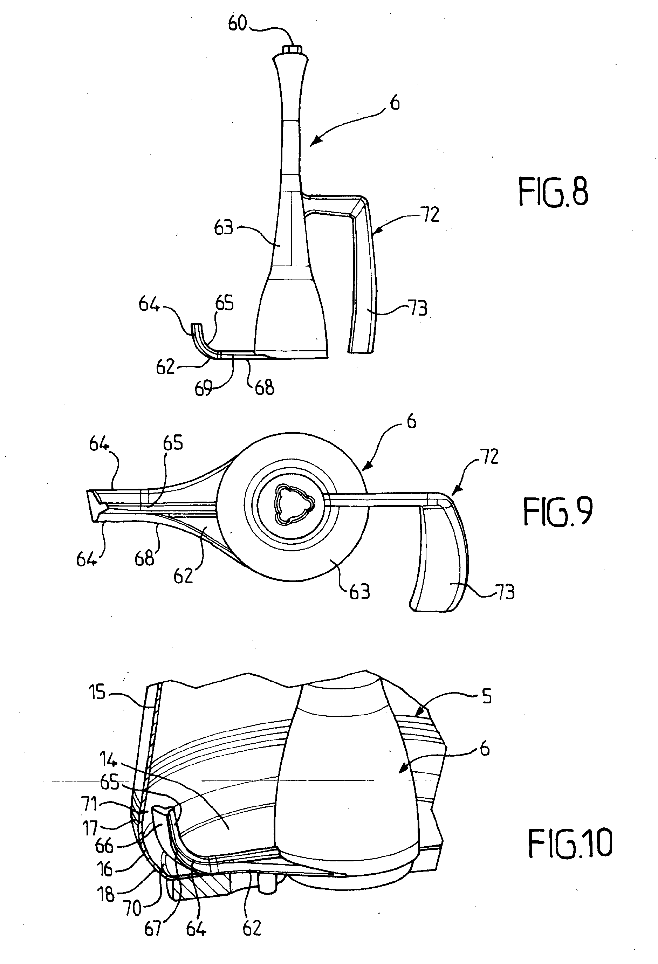

Tel que que mieux visible sur la figure 8, la pale 6 présente un bras inférieur 62 s'étendant à partir de la partie inférieure d'un moyeu 63. Le bras inférieur 62 comporte une extrémité relevée 64.

Tel que mieux visible sur la figure 9, le bras inférieur 62 présente une nervure supérieure de rigidification 65. Plus particulièrement, la nervure supérieure de rigidification 65 est issue du moyeu 63 et s'étend jusqu'à l'extrémité relevée 64 du bras inférieur 62. La nervure supérieure de rigidification 65 atteint la partie terminale de l'extrémité relevée 64 du bras inférieur 62.

Tel que visible sur les figures 2 et 10, le bras inférieur 62 s'étend au dessus du fond 14 de la cuve 5. L'extrémité relevée 64 du bras inférieur 62 ménage un passage périphérique 70 avec la paroi latérale 15 de la cuve 5. Le passage périphérique 70 présente une restriction supérieure 71. L'extrémité relevée 64 du bras inférieur 62 s'élève au dessus de la section maximale du renflement annulaire 16 de la paroi latérale 15 de la cuve 5.

L'extrémité relevée 64 du bras inférieur 62 présente une face extérieure 66 se rapprochant de la paroi latérale 15 de la cuve 5 à partir d'un bord latéral d'attaque 67.

La distance minimale entre la face extérieure 66 de l'extrémité relevée 64 du bras inférieur 62 et la paroi latérale 15 de la cuve 5 est avantageusement comprise entre 0,5 et 2 mm. Dans l'exemple de réalisation illustré sur les figures, la distance minimale entre la face extérieure 66 et la paroi latérale 15 est de l'ordre de 1 mm.

La distance maximale entre le bras inférieur 62 et la cuve 5 au niveau du passage périphérique 70 est avantageusement comprise entre 2 mm et 1 cm. Dans l'exemple de réalisation illustré sur les figures, la distance maximale entre le bras inférieur 62 et la cuve 5 au niveau du passage périphérique 70 est de l'ordre de 5 mm.

La distance minimale entre le bras inférieur 62 et le fond 14 de la cuve 5 est avantageusement plus réduite que la distance maximale entre le bras inférieur 62 et la paroi latérale 15 de la cuve 5 au niveau du passage périphérique 70. Avantageusement, le bras inférieur 62 ménage au moins un passage inférieur avec le fond 14 de la cuve 5. La distance minimale entre le bras inférieur 62 et le fond 14 de la cuve 5 est avantageusement comprise entre 0,5 et 2 mm. Dans l'exemple de réalisation illustré sur les figures, la distance minimale entre le bras inférieur 62 et le fond 14 de la cuve 5 est de l'ordre de 1 mm.

De plus le bras inférieur 62 présente une face inférieure 68 se rapprochant du fond 14 de la cuve 5 à partir d'un bord inférieur d'attaque 69. La face inférieure 68 est prolongée par la face extérieure 66 et le bord inférieur d'attaque 69 est prolongé par le bord latéral d'attaque 67.

La pale 6 comporte un bras supérieur 72 s'étendant à partir de la partie médiane du moyeu 63. Le bras supérieur 72 présente une extrémité plongeante 73 inclinée vers l'arrière par rapport au sens de rotation de la pale 6 dans la cuve 5. Le bras supérieur 72 plonge dans la cuve 5 et s'étend à distance de la paroi latérale 15 de la cuve 5. Le bras supérieur 72 est rattaché horizontalement sur le moyeu 63 de la pâle 6 pour dégager cette zone et ainsi éviter des formations de blocs dans le cas de la sauce au chocolat.

La pale 6 est de préférence réalisée en matériau rigide. La pale 6 est avantageusement réalisée en matière plastique rigide, telle que notamment en PBT.

L'appareil électrique de cuisson selon l'invention fonctionne et s'utilise de la manière suivante.

L'utilisateur choisit un programme de fonctionnement proposé par le dispositif de commande et ajoute les ingrédients dans la cuve 5 disposée sur la base motorisée 8. Les recettes usuelles de sauces comportent des ingrédients liquides ou pateux tels que le lait, la crème, l'huile, les oeufs, le vin, le jus de citron, la vanille liquide, ainsi que des ingrédients plus consistants à broyer, dissoudre ou à disperser tels que les échalottes, le chocolat, le bouillon en cube, le sel, le sucre, l'amidon, la farine, le poivre moulu, le cacao. Le bras inférieur 62 permet de remuer la zone inférieure de la cuve 5. La face inférieure 68 biseautée du bras inférieur 62 et la face extérieure 66 biseautée de l'extrémité relevée 64 permettent d'écraser les ingrédients entre le bras inférieur 62 et la cuve 5. Le passage périphérique 70 permet de réduire la taille des particules d'aliments les plus importantes alors que les morceaux plus petits sont écrasés entre le fond 14 de la cuve 5 et le bras inférieur 62 au niveau du passage inférieur. La pale 6 entrainée en rotation par l'organe d'entraînement supérieur 33 de la cuve 5 est maintenue en position par rapport au fond 14 de la cuve 5 par les conformations hélicoïdales associées 61 entrainées par les conformations hélicoïdales 37. Le bras supérieur 72 en forme de spatule permet de créer un tourbillon pour mélanger les ingrédients restés en suspension. Les ingrédients disposés dans la cuve 5 sont ainsi progressivement homogénéisés.

L'utilisateur peut ainsi préparer un plat avec une sauce bien homogène en utilisant la partie cuiseur vapeur 1 et la partie saucier 2.

A titre de variante, la restriction supérieure 71 n'est pas nécessairement ménagée au niveau de l'extrémité libre du bras inférieur 62. En d'autres termes l'extrémité relevée 64 du bras inférieur 62 peut s'étendre au dessus du niveau de la restriction supérieure 71.

A titre de variante, les moyens de chauffe n'appartiennent pas nécessairement à un siège chauffant prévu pour recevoir la cuve 5, mais peuvent notamment être fixés à la cuve 5 ou appartenir à un accessoire chauffant porté par la base motorisée 8, tel que décrit par exemple dans le document EP 0 350 380.

A titre de variante, la pale 6 n'est pas nécessairement entrainée par l'intermédiaire de la cuve 5. L'organe d'entraînement supérieur 33 présentant des conformations hélicoïdales 37 pourrait notamment appartenir à la base motorisée 8.

Si désiré la pale 6 peut comporter plusieurs bras inférieurs 62. Si désiré la pale 6 peut comporter plusieurs bras supérieurs 72, ou être dépourvue de bras supérieur.

A titre de variante, la cuve 5 n'est pas nécessairement montée sur la base motorisée 8. La cuve 5 pourrait être solidaire de la base motorisée 8.

A titre de variante, la pale 6 n'est pas nécessairement entrainée par la base du moyeu 63. La pale 6 pourrait notamment être entrainée en rotation par la partie supérieure 60 du moyeu 63.

La présente invention n'est nullement limitée à l'exemple de réalisation décrit et à ses variantes, mais englobe de nombreuses modifications dans le cadre des revendications.

## Revendications

1. Appareil électroménager de préparation culinaire chauffant comportant une cuve (5) présentant un fond (14) et une paroi latérale (15), ainsi qu'une pale (6) entrainée en rotation dans la cuve (5), la pale (6) présentant un bras inférieur (62) s'étendant au dessus du fond (14) de la cuve (5), le bras inférieur (62) comportant une extrémité relevée (64) ménageant un passage périphérique (70) avec la paroi latérale (15) de la cuve (5), le passage périphérique (70) présentant une restriction supérieure (71), **caractérisé en ce que** l'extrémité relevée (64) du bras inférieur (62) présente une face extérieure (66) se rapprochant de la paroi latérale (15) de la cuve (5) à partir d'un bord latéral d'attaque (67).

2. Appareil électroménager de préparation culinaire chauffant selon la revendication 1, **caractérisé en ce que** la distance minimale entre le bras inférieur (62) et le fond (14) de la cuve (5) est plus réduite que la distance maximale entre le bras inférieur (62) et la paroi latérale (15) de la cuve (5) au niveau du passage périphérique (70).

3. Appareil électroménager de préparation culinaire chauffant selon l'une des revendications 1 ou 2, **caractérisé en ce que** le bras inférieur (62) ménage au moins un passage inférieur avec le fond (14) de la cuve (5).

4. Appareil électroménager de préparation culinaire chauffant selon l'une des revendications 1 à 3, **caractérisé en ce que** le bras inférieur (62) présente une face inférieure (68) se rapprochant du fond (14) de la cuve (5) à partir d'un bord inférieur d'attaque (69).

5. Appareil électroménager de préparation culinaire chauffant selon l'une des revendications 1 à 4, **caractérisé en ce que** la paroi latérale de la cuve (5) présente un renflement annulaire (16).

6. Appareil électroménager de préparation culinaire chauffant selon la revendication 5, **caractérisé en ce que** le renflement annulaire (16) présente une partie supérieure (17) inclinée entre 1 et 5° et de préférence entre 2 et 4°.

7. Appareil électroménager de préparation culinaire chauffant selon l'une des revendications 5 ou 6, **caractérisé en ce que** l'extrémité relevée (64) du bras inférieur (62) s'élève au dessus de la section maximale du renflement annulaire (16).

8. Appareil électroménager de préparation culinaire chauffant selon l'une des revendications 1 à 7, **caractérisé en ce que** le bras inférieur (62) présente une nervure supérieure de rigidification (65).

9. Appareil électroménager de préparation culinaire chauffant selon la revendication 8, **caractérisé en ce que** la nervure supérieure de rigidification (65) s'étend jusqu'à l'extrémité relevée (64) du bras inférieur (62).

10. Appareil électroménager de préparation culinaire chauffant selon l'une des revendications 1 à 9, **caractérisé en ce que** la pale (6) comporte un bras supérieur (72) plongeant dans la cuve (5).

11. Appareil électroménager de préparation culinaire chauffant selon l'une des revendications 1 à 10, **caractérisé en ce que** la cuve (5) repose sur une base motorisée (8) prévue pour entrainer en rotation la pale (6) agencée dans la cuve (5).

12. Appareil électroménager de préparation culinaire chauffant selon la revendication 11, **caractérisé en ce que** la cuve (5) porte un axe entraîneur (31) présentant un organe d'entraînement inférieur (32) prévu pour être entrainé en rotation par la base motorisée (8) et un organe d'entrainement supérieur (33) prévu pour entrainer en rotation la pale (6).

13. Appareil électroménager de préparation culinaire chauffant selon la revendication 12, **caractérisé en ce que** l'organe d'entraînement supérieur (33) présente des conformations hélicoïdales (37).

14. Appareil électroménager de préparation culinaire chauffant selon l'une des revendications 11 à 13, **caractérisé en ce que** la base motorisée (8) comporte un siège chauffant (20) et **en ce que** la cuve (5) repose sur le siège chauffant (20).

## Patentansprüche

1. Elektrohaushaltsgerät mit Aufheizfunktion für kulinarische Zubereitungen mit einem Behälter (5), der einen Boden (14) und eine Seitenwand (15) aufweist sowie ein Drehelement (6), das im Behälter (5) in Drehung versetzt wird, wobei das Drehelement (6) einen unteren Arm (62) aufweist, der sich über den Boden (14) des Behälters (5) erstreckt, wobei der untere Arm (62) ein höher liegendes Ende (64) umfasst, das einen umlaufenden Durchlauf (70) mit der Seitenwand (15) des Behälters (5) ausbildet, wobei der umlaufende Durchlauf (70) eine höhere Begrenzung (71) aufweist, **dadurch gekennzeichnet, dass** das höher liegende Ende (64) des unteren Arms (62) eine Außenseite (66) aufweist, die sich der Seitenwand (15) des Behälters (5) über eine seitliche Anschnittsfläche (67) annähert.

2. Elektrohaushaltsgerät mit Aufheizfunktion für kulinarische Zubereitungen nach Anspruch 1, **dadurch gekennzeichnet, dass** der Mindestabstand zwischen dem unteren Arm (62) und dem Boden (14) des Behälters (5) kleiner ist als der Höchstabstand zwischen dem unteren Arm (62) und der Seitenwand (15) des Behälters (5) auf Ebene des umlaufenden Durchlaufs (70).

3. Elektrohaushaltsgerät mit Aufheizfunktion für kulinarische Zubereitungen nach einem der Ansprüche 1 oder 2, **dadurch gekennzeichnet, dass** der untere Arm (62) mit dem Boden (14) des Behälters (5) mindestens einen unteren Durchlauf ausbildet.

4. Elektrohaushaltsgerät mit Aufheizfunktion für kulinarische Zubereitungen nach einem der Ansprüche 1 bis 3, **dadurch gekennzeichnet, dass** der untere Arm (62) eine Unterseite (68) aufweist, die sich dem Boden (14) des Behälters (5) über eine untere Anschnittsfläche (69) annähert.

5. Elektrohaushaltsgerät mit Aufheizfunktion für kulinarische Zubereitungen nach einem der Ansprüche 1 bis 4, **dadurch gekennzeichnet, dass** die Seitenwand des Behälters (5) eine ringförmig verlaufende Ausbuchtung (16) aufweist.

6. Elektrohaushaltsgerät mit Aufheizfunktion für kulinarische Zubereitungen nach Anspruch 5, **dadurch gekennzeichnet, dass** die ringförmig verlaufende Ausbuchtung (16) einen oberen Teil (17) aufweist, der zwischen 1 und 5° und vorzugsweise zwischen 2 und 4° geneigt ist.

7. Elektrohaushaltsgerät mit Aufheizfunktion für kulinarische Zubereitungen nach einem der Ansprüche 5 oder 6, **dadurch gekennzeichnet, dass** das höher liegende Ende (64) des unteren Arms (62) über den höchsten Abschnitt der ringförmig verlaufenden Ausbuchtung (16) ragt.

8. Elektrohaushaltsgerät mit Aufheizfunktion für kulinarische Zubereitungen nach einem der Ansprüche 1 bis 7, **dadurch gekennzeichnet, dass** der untere Arm (62) eine oben liegende Kühlrippe (65) aufweist.

9. Elektrohaushaltsgerät mit Aufheizfunktion für kulinarische Zubereitungen nach Anspruch 8, **dadurch gekennzeichnet, dass** die oben liegende Kühlrippe (65) sich bis zum höher liegenden Ende (64) des unteren Arms (62) erstreckt.

10. Elektrohaushaltsgerät mit Aufheizfunktion für kulinarische Zubereitungen nach einem der Ansprüche 1 bis 9, **dadurch gekennzeichnet, dass** das Drehelement (6) einen oberen Arm (72) aufweist, der in den Behälter (5) hineinragt.

11. Elektrohaushaltsgerät mit Aufheizfunktion für kulinarische Zubereitungen nach einem der Ansprüche 1 bis 10, **dadurch gekennzeichnet, dass** der Behälter (5) auf einer motorisierten Basis (8) ruht, die dafür vorgesehen ist, das innerhalb des Behälters (5) angeordnete Drehelement (6) in Drehung zu versetzen.

12. Elektrohaushaltsgerät mit Aufheizfunktion für kulinarische Zubereitungen nach Anspruch 11, **dadurch gekennzeichnet, dass** der Behälter (5) eine Antriebsachse (31) trägt, die ein unteres Antriebselement (32) aufweist, das dafür vorgesehen ist, über die motorisierte Basis (8) in Drehung versetzt zu werden, sowie ein oberes Antriebselement (33), das dafür vorgesehen ist, das Drehelement (6) in Drehung zu versetzen.

13. Elektrohaushaltsgerät mit Aufheizfunktion für kulinarische Zubereitungen nach Anspruch 12, **dadurch gekennzeichnet, dass** das obere Antriebselement (33) schraubenförmige Strukturen (37) aufweist.

14. Elektrohaushaltsgerät mit Aufheizfunktion für kulinarische Zubereitungen nach einem der Ansprüche 11 bis 13, **dadurch gekennzeichnet, dass** die motorisierte Basis (8) eine Heizplatte (20) umfasst und dass der Behälter (5) auf der Heizplatte (20) ruht.

## Claims

1. Food preparation household electrical heating appliance comprising a tank (5) having a bottom (14) and a side wall (15) and a blade (6) driven in rotation in the tank (5), the blade (6) having a lower arm (62) extending above the bottom (14) of the tank (5), the lower arm (62) having a raised end (64) providing a peripheral passage (70) with the side wall (15) of the tank (5), the peripheral passage (70) having an upper restriction (71), **characterised in that** the raised end (64) of the lower arm (62) has an outer side (66) approaching the side wall (15) of the tank (5) from a leading side edge (67).

2. Food preparation household electrical heating appliance according to claim 1, **characterised in that** the minimum distance between the lower arm (62) and the bottom (14) of the tank (5) is less than the maximum distance between the lower arm (62) and the side wall (15) of the tank (5) at the peripheral passage (70).

3. Food preparation household electrical heating appliance according to claim 1 or 2, **characterised in that** the lower arm (62) provides at least one lower passage with the bottom (14) of the tank (5).

4. Food preparation household electrical heating appliance according one of claims 1 to 3, **characterised in that** the lower arm (62) has a bottom side (68) approaching the bottom (14) of the tank (5) from a leading lower edge (69).

5. Food preparation household electrical heating appliance according to one of claims 1 to 4, **characterised in that** the side wall of the tank (5) has an annular bulge (16).

6. Food preparation household electrical heating appliance according to claim 5, **characterised in that** the annular bulge (16) has an upper part (17) inclined between 1° and 5° and preferably between 2° and 4°.

7. Food preparation household electrical heating appliance according to claim 5 or 6, **characterised in that** the raised end (64) of the lower arm (62) rises above the maximum section of the annular bulge (16).

8. Food preparation household electrical heating appliance according to one of claims 1 to 7, **characterised in that** the lower arm (62) has an upper stiffening rib (65).

9. Food preparation household electrical heating appliance according to claim 8, **characterised in that** the upper stiffening rib (65) extends to the raised end (64) of the lower arm (62).

10. Food preparation household electrical heating appliance according to one of claims 1 to 9, **characterised in that** the blade (6) comprises an upper arm (72) dipping into the tank (5).

11. Food preparation household electrical heating appliance according to one of claims 1 to 10, **characterised in that** the tank (5) rests on a motorised base (8) designed to rotate the blade (6) arranged in the tank (5).

12. Food preparation household electrical heating appliance according to claim 11, **characterised in that** the tank (5) bears a drive shaft (31) having a lower drive member (32) designed to be rotated by the motorised base (8) and an upper drive member (33) designed to rotate the blade (6).

13. Food preparation household electrical heating appliance according to claim 12, **characterised in that** the upper drive member (33) has helical conformations (37).

14. Food preparation household electrical heating appliance according to one of claims 11 to 13, **characterised in that** the motorised base (8) includes a heating base (20), and **in that** the tank (5) rests on the heating base (20).
